# EUROPEAN PATENT SPECIFICATION

(11) **EP 4 266 105 B1**
(45) Date of publication and mention of the grant of the patent: **28.10.2026**
(21) Application number: 21906272.6
(22) Date of filing: 22.11.2021
(51) Int. Cl.: G02B 13/14, G02B 13/00, G02B 13/18, G02B 27/42

(54) **INFRARED IMAGING LENS AND INFRARED CAMERA**
INFRAROTBILDGEBUNGSLINSE UND INFRAROTKAMERA
LENTILLE D'IMAGERIE INFRAROUGE ET CAMÉRA INFRAROUGE

(30) Priority: 16.12.2020 JP 2020208736
(43) Date of publication of application: 25.10.2023
(73) Proprietor: Nippon Electric Glass Co., Ltd., Otsu-shi, Shiga 520-8639 (JP)
(72) Inventor: MATSUSHITA, Yoshimasa, Otsu-shi, Shiga 520-8639 (JP); SATO, Fumio, Otsu-shi, Shiga 520-8639 (JP); HORI, Nobuo, Higashimatsuyama-shi, Saitama 355-0003 (JP)
(74) Representative: Vidon Brevets & Stratégie
(86) International application number: PCT/JP2021/042751
(87) International publication number: WO 2022/130909

(56) References cited:
- WO-A1-2016/027786
- WO-A1-2020/105719
- WO-A1-2020/105719
- JP-A- 2007 241 032
- JP-A- 2009 063 942
- JP-A- 2019 048 752
- US-A1- 2009 067 041

## Description

### Technical Field

The present invention relates to an infrared imaging lens and an infrared camera.

### Background Art

An infrared camera for capturing an image of a subject with use of infrared radiation in a far infrared region, in particular, a wavelength region of approximately 10 µm which is suitable for biodetection, is applied to a surveillance camera, a security camera, an in-vehicle night vision system, and the like. An infrared imaging lens which is applied to such an infrared camera is known.

US2009/067041 A1 discloses an infrared imaging lens known to the state of the art, based on a combination of lenses made of polycrystalline material.

### Citation List

### [Patent Literatures]

[Patent Literature 1]
   International Publication No. WO2016/027786 A1
[Patent Literature 2]
   Japanese Patent Application Publication Tokukai No. 2011-128538
[Patent Literature 3]
   Japanese Patent Application Publication Tokukaisho No. 62-109014

### Summary of Invention

### Technical Problem

There is a need for an infrared imaging lens which is used in such a far infrared region, which is excellent in resolution, and which can be used as a standard lens. In particular, there is a need to provide an infrared imaging lens having an excellent resolution suited to an image sensor having a pixel pitch approximately equivalent to a wavelength.

An aspect of the present invention has been made by paying attention to the above problem, and an object thereof is to provide an infrared imaging lens which is compatible with an image sensor having a pixel pitch approximately equivalent to a wavelength, which is excellent in resolution, and which can be used as a standard lens.

### Solution to Problem

In order to attain the object, an aspect of the present invention is an infrared imaging lens according to claim 1.

In order to attain the object, another aspect of the present invention not according to the claims is an infrared imaging lens including a plurality of lenses which are disposed in respective positions, the plurality of lenses each being made of glass having a refractive index of 2.8 to 4.0 measured at a wavelength of 10 µm, the infrared imaging lens having an image circle having a diameter which is 0.7 times to 1.3 times a focal length.

### Advantageous Effects of Invention

The aspects of the present invention make it possible to provide an infrared imaging lens which is compatible with an image sensor having a pixel pitch approximately equivalent to a wavelength, which is excellent in resolution, and which can be used as a standard lens.

### Brief Description of Drawings

Fig. 1 is a cross-sectional view illustrating a configuration of main parts of an infrared imaging lens in accordance with an embodiment of the present invention.
Fig. 2 is an optical path diagram of an infrared imaging lens in accordance with an embodiment of the present invention.
Fig. 3 is an aberration diagram illustrating spherical aberration, astigmatism, and distortion of an infrared imaging lens in accordance with Numerical Example 1 of the present invention.
Fig. 4 is an aberration diagram illustrating comatic aberration of the infrared imaging lens in accordance with Numerical Example 1 of the present invention.
Fig. 5 is a graph showing image height dependence of a relative illuminance of the infrared imaging lens in accordance with Numerical Example 1 of the present invention.
Fig. 6 is a graph showing spatial frequency dependence of an MTF of the infrared imaging lens in accordance with Numerical Example 1 of the present invention.
Fig. 7 is a graph showing focal shift dependence of an MTF of the infrared imaging lens in accordance with Numerical Example 1 of the present invention.
Fig. 8 is an optical path diagram of an infrared imaging lens in accordance with Numerical Example 2 of the present invention.
Fig. 9 is an aberration diagram illustrating spherical aberration, astigmatism, and distortion of the infrared imaging lens in accordance with Numerical Example 2 of the present invention.
Fig. 10 is an aberration diagram illustrating comatic aberration of the infrared imaging lens in accordance with Numerical Example 2 of the present invention.
Fig. 11 is a graph showing image height dependence of a relative illuminance of the infrared imaging lens in accordance with Numerical Example 2 of the present invention.
Fig. 12 is a graph showing spatial frequency dependence of an MTF of the infrared imaging lens in accordance with Numerical Example 2 of the present invention.
Fig. 13 is a graph showing focal shift dependence of an MTF of the infrared imaging lens in accordance with Numerical Example 2 of the present invention.
Fig. 14 is an optical path diagram of an infrared imaging lens in accordance with Numerical Example 3 of the present invention.
Fig. 15 is an aberration diagram illustrating spherical aberration, astigmatism, and distortion of the infrared imaging lens in accordance with Numerical Example 3 of the present invention.
Fig. 16 is an aberration diagram illustrating comatic aberration of the infrared imaging lens in accordance with Numerical Example 3 of the present invention.
Fig. 17 is a graph showing image height dependence of a relative illuminance of the infrared imaging lens in accordance with Numerical Example 3 of the present invention.
Fig. 18 is a graph showing spatial frequency dependence of an MTF of the infrared imaging lens in accordance with Numerical Example 3 of the present invention.
Fig. 19 is a graph showing focal shift dependence of an MTF of the infrared imaging lens in accordance with Numerical Example 3 of the present invention.

### Description of Embodiments

### [Embodiment]

### <Overview of infrared imaging lens>

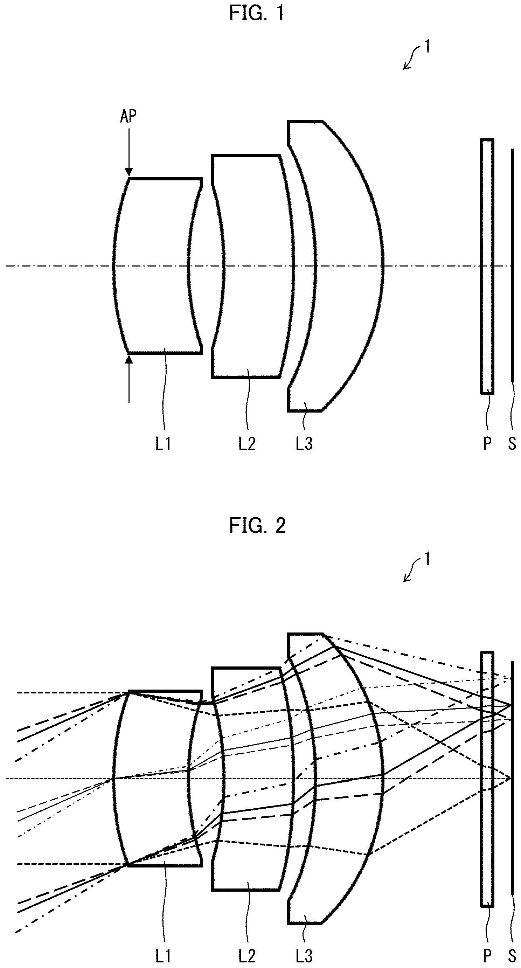

An infrared imaging lens 1 in accordance with an embodiment is a lens system which can handle a far infrared wavelength region and which forms an image of a subject on an image surface S of an image sensor or the like. Fig. 1 is a cross-sectional view illustrating a configuration of main parts of the infrared imaging lens 1 and taken along an optical axis. Fig. 2 is an optical path diagram showing a cross-sectional view of main parts of the infrared imaging lens 1, accompanied by optical paths.

The infrared imaging lens 1 includes a first lens L1, a second lens L2, and a third lens L3 which are disposed in this order from an object side to an image surface S side. The first lens L1 to the third lens L3 uniformly move in the optical axis direction during focusing.

The first lens L1, the second lens L2, and the third lens L3 are each made of glass having a refractive index of 2.8 to 4.0 measured at a wavelength of 10 µm. More specifically, the first lens L1, the second lens L2, and the third lens L3 are each made of chalcogenide glass having a refractive index of 2.8 to 4.0 measured at a wavelength of 10 µm. The first lens L1, the second lens L2, and the third lens L3 can all be made of an identical glass material.

As illustrated in Figs. 1 and 2, a parallel flat plate P is disposed between the third lens L3 and the image surface S. The parallel flat plate P is an optical window which is hermetically sealed so as to be loaded on the image surface S side, and is made of silicon, hypoxic silicon, or germanium. The material and thickness of the parallel flat plate P can be determined in accordance with what image sensor to employ.

As indicated by the sign "AP" in Fig. 1, an effective diameter of an object-side surface (first surface) of the first lens L1 is equivalent to an aperture of the infrared imaging lens 1. The first lens L1, the second lens L2, the third lens L3, and the parallel flat plate P each have an anti-reflection (AR) coated surface. It is possible to apply an appropriate known technique to such anti-reflection coating in a far infrared region.

### <Glass material for each lens>

In particular, it is preferable that the chalcogenide glass contain 20% to 90% of tellurium (Te) in mole percentage and have an Abbe number of not less than 100 measured at a wavelength of 10 µm. Note that the Abbe number as used herein is defined in a numerical example described later. Furthermore, the chalcogenide glass preferably contains at least one of 0% to 50% of germanium (Ge) and 0% to 50% of gallium (Ga) in mole percentage.

The chalcogenide glass having a refractive index of 2.8 to 4.0 measured at a wavelength of 10 µm, that is, having a high refractive index in such a far infrared region, has been developed by the applicant of the present invention (see International Publication No. WO2020/105719A1). This glass material, more specifically, has achieved a refractive index in a range of 2.74 to 3.92 as measured at a wavelength of 10 µm. For example, a refractive index measured at a wavelength of 10 µm is preferably 2.74 to 3.92, 2.8 to 3.8, and particularly preferably 2.9 to 3.7. In a case where the refractive index it too low, the focal length tends to be too long.

It is also preferable that the chalcogenide glass has an Abbe number (V10) of not less than 100, not less than 120, not less than 150, or not less than 180. The Abbe number is particularly preferably not less than 220. The Abbe number (V10) will be defined later. In a case where the Abbe number it too low, chromatic aberration tends to be increased. An upper limit of the Abbe number is not particularly limited, but is practically not more than 350.

The glass material exhibits very little light absorption over a wide range of wavelengths in a far infrared region, as wide as at least a wavelength of 7 µm to 14 µm. In particular, the glass material has a feature of exhibiting, despite being chalcogenide, little light absorption even in a wavelength region of not less than 10 µm. It is possible to use an "infrared absorption edge wavelength" and an "internal transmittance" as indicators, indicating that chalcogenide glass is highly light-transmissive in a far infrared region.

Note here that the infrared absorption edge wavelength refers to an absorption edge wavelength in a far infrared region at a wavelength of not less than 8 µm and is defined by a wavelength at which a light transmittance of 20% is obtained at a thickness of 2 mm of the material. The term "internal transmittance" refers to a transmittance inside the material and does not include a reflection loss on a surface of the material. Chalcogenide glass serving as a glass material of which the first lens L1, the second lens L2, and the third lens are made has an infrared absorption edge wavelength of not less than 18 µm.

Thus, the chalcogenide glass also transmits therethrough infrared radiation having a wavelength of more than 10 µm, and has a good transmittance at least in a wavelength range of 7 µm to 14 µm. The chalcogenide glass has an internal transmittance, measured at a thickness of 2 mm, of not less than 90% at a wavelength of 10 µm.

Further, the glass material is glass and can be press-molded so as to form a lens having an aspherical surface. Thus, a lens made of this glass material is easily mass-produced. The glass material preferably has a glass transition temperature as low as not more than 200°C and is desirably easily press-molded. In the infrared imaging lens 1, at least one of the lenses is an aspherical lens, so that aberration is prevented or reduced.

In a case where an aspherical lens cannot be applied, an infrared imaging lens for preventing or reducing aberration will be configured to have an increased number of lenses and thus have an increased weight and an increased size. This also results in an imaging lens which is costly and unsuitable for commercial use. Note that "aspherical (surface)" as used herein encompasses "diffractive (surface)".

The chalcogenide glass also makes it possible to form a lens having a surface particularly complicated in shape, such as a diffraction surface. Thus, with use of the chalcogenide glass, a surface of at least one of the lenses of the infrared imaging lens 1 is formed to be a diffractive surface, so that it is possible to satisfactorily inhibit aberration in a wide wavelength range of 7 µm to 14 µm.

Crystalline materials, such as silicon (Si), germanium (Ge), zinc sulfide (ZnS), and zinc selenide (ZnSe), each of which is used as a material that transmits therethrough light in a far infrared region, cannot be press-molded. This makes it difficult to mass-produce an aspherical lens having a complicated shape. It is therefore difficult to use such a crystalline material to achieve a low-cost commercial aspherical lens.

### <Matters concerning image surface>

On the image surface S of the infrared imaging lens 1, an image circle has a diameter φs which is equivalent to a focal length f of the infrared imaging lens 1. That is, the infrared imaging lens 1 is a standard lens. More specifically, the diameter φs of the image circle is in a range of 0.7 times to 1.3 times the focal length f. In other words, the following relational expression is satisfied: $0.7 \leq φs / f \leq 1.3 .$ Alternatively, the infrared imaging lens 1 being a standard lens can be defined by a half angle of view of the infrared imaging lens 1 being 21° to 36°.

The infrared imaging lens 1 has a modulation transfer function (MTF) of not less than 0.17 (17%) at a spatial frequency of 41.7 cycles/mm in such an image circle. The reason for focusing on the spatial frequency of 41.7 cycles/mm is described below.

As image sensors in a far infrared region become increasingly smaller in size, pixel pitches of the image sensors have reached a narrow pitch limit approximately equivalent to a wavelength. As an image sensor in a far infrared region with a wavelength of approximately 7 µm to 14 µm, an image sensor having a pixel pitch of 12 µm is commercially available. A spatial frequency of 41.7 cycles/mm corresponds to a Nyquist frequency of an image sensor having a pixel pitch of 12 µm.

Note that the MTF being not less than 0.17 in the image circle indicates that sufficient resolution is obtained in the entire region of the image circle. In other words, the infrared imaging lens 1 is a standard lens that is compatible with a far infrared camera to which a small-sized image sensor in a wavelength region of approximately 7 µm to 14 µm is applied.

As the above image sensor, an image sensor including 640 × 480 pixels (video graphics array (VGA)) and an image sensor including 640 × 512 pixels (VGA+) have been developed. These image sensors each have an effective diagonal length of approximately 9.8 mm. As such, an image circle of the infrared imaging lens 1 has a diameter φs of approximately equal to or more than 9.8 mm, which corresponds to the effective diagonal length. Thus, due to the above-described relationship between the diameter φs of the image circle and the focal length f, the focal length f of the infrared imaging lens 1 is in a range of 7.8 mm to 11.8 mm.

The infrared imaging lens 1 in accordance with the present embodiment is an infrared imaging lens including a plurality of lenses which are disposed in respective positions, the plurality of lenses each being made of the glass having a refractive index of 2.8 to 4.0 measured at a wavelength of 10 µm. As such, in the infrared imaging lens 1, at least one of the plurality of lenses can be an aspherical lens.

This makes it possible to provide a standard lens conventionally impossible to provide, specifically, a standard lens which can handle a wide wavelength range of 7 µm to 14 µm, which has an F-number as low as approximately one (1), and which is excellent in resolution. Particularly in terms of resolution, a standard lens having remarkably excellent properties, i.e., an MTF of not less than 0.17 at a spatial frequency of 41.7 cycles/mm in a wavelength range of 7 µm to 14 µm in the image circle, is provided. Further, it is possible to provide a standard lens exhibiting little light absorption by a glass material of the lenses over a wide wavelength range of at least 7 µm to 14 µm. This, combined with the low F-number of approximately one (1), makes it possible to provide a bright imaging lens.

Further, the infrared imaging lens 1 in accordance with the present embodiment can have an MTF of not less than 0.50 at a spatial frequency corresponding to 1/2 of the Nyquist frequency of 41.7 cycles/mm. This indicates that a good MTF is obtained not only at the spatial frequency corresponding to the Nyquist frequency but also over an entire range from a spatial frequency of 0 cycles/mm to the Nyquist frequency.

Further, the infrared imaging lens 1 in accordance with the present embodiment can have a relative illuminance on the image surface of not less than 40% in the image circle. This indicates that a satisfactory peripheral light quantity is secured.

### <Details of configuration of each lens>

Further, the infrared imaging lens 1 in accordance with the present embodiment can be configured to have details of each part as described below.

The first lens L1 has positive refractive power and has a meniscus shape having a convex surface which is oriented to the object side. The first lens L1 can be an aspherical lens. The first lens L1 has (i) an object-side surface (first surface) which is a spherical surface and (ii) an image surface S-side surface (second surface) which can be an aspherical surface.

As described above, the effective diameter of the object-side surface (first surface) of the first lens L1 serves as the aperture of the infrared imaging lens 1. In this case, the subsequent lenses sequentially increase in size. This causes the infrared imaging lens 1 to have an increased outer diameter and an increased volume. As such, it is preferable that (i) the first lens L1 have a meniscus shape having a convex surface which is oriented to the object side and (ii) the following limitation is given to the power of the first lens L1.

The focal length f1 of the first lens L1 is in a range of 1.0 times to 2.9 times the focal length f of the infrared imaging lens 1. In other words, it is preferable that the following relational expression be satisfied: $1.0 \leq f 1 / f \leq 2.9 .$

This configuration makes it possible to reduce the outer diameter and the volume of the infrared imaging lens 1 in comparison to a case in which an aperture diaphragm is inserted between the lenses. Further, in a case where the effective diameter of the object-side surface (first surface) of the first lens L1 serves as the aperture of the infrared imaging lens 1 and the above relational expression is satisfied, vignetting of peripheral light beams is reduced, so that peripheral light quantity is increased.

The second lens L2 has positive refractive power and has a meniscus shape having a convex surface which is oriented to the image surface S side. The second lens L2 is an aspherical lens and has (i) an object-side surface (third surface) which is an aspherical surface and (ii) an image surface S-side surface (fourth surface) which can be a diffractive surface.

The third lens L3 has positive refractive power and has a meniscus shape having a convex surface which is oriented to the image surface S side. The third lens L3 is an aspherical lens and has (i) an object-side surface (fifth surface) which is a spherical surface and (ii) an image surface S-side surface (sixth surface) which can be an aspherical surface.

Thus, the infrared imaging lens 1 includes the first lens L1, the second lens L2, and the third lens which are disposed in respective positions, and it is preferable that all of the first lens L1, the second lens L2, and the third lens have a positive refractive index. The infrared imaging lens 1 is preferably configured such that, in particular, the third lens L3 located closest to the image surface has a highest power.

Then, in a case where the second lens L2 and the third lens L3 both have a meniscus shape having a convex surface which is oriented to the image surface S side, it is possible to prevent or reduce an increase in Petzvar sum, prevent or reduce field curvature, and maintain planarity. Further, it is particularly preferable that the power of the third lens L3, the power of the first lens L1, and the power of the second lens L2 decrease in this order.

In a case where the infrared imaging lens 1 is configured such that (i) the third lens L3 located closest to the image surface has a highest power and (ii) the third lens L3 has a meniscus shape having a convex surface which is oriented to the image surface S side, astigmatism is reduced.

Further, as described above, it is preferable that at least one of the first lens L1, the second lens L2, and the third lens be an aspherical lens. This makes it possible to reduce spherical aberration and astigmatism of the infrared imaging lens 1. It is particularly preferable that each of the first lens L1, the second lens L2, and the third lens be an aspherical lens.

Further, it is preferable that the image surface S-side surface (fourth surface) of the second lens L2 or the object-side surface (fifth surface) of the third lens L3 be a diffractive surface. This makes it possible to generate negative dispersion and reduce transverse chromatic aberration.

### <Other preferable aspects>

The infrared imaging lens 1 in accordance with the present embodiment preferably has an F-number in a range of 1.0 to 1.2, in order to achieve excellent resolution compatible with a pixel pitch approximately equivalent to a wavelength of approximately 7 µm to 14 µm, which is a wavelength handled by the infrared imaging lens 1. Causing the F-number to be in this range makes it possible to provide a bright standard lens which is used in an infrared region at a wavelength of approximately 7 µm to 14 µm.

The infrared imaging lens 1 in accordance with the present embodiment is preferably configured such that the third lens L3 has a focal length f3 which is approximately equal to the focal length f of the infrared imaging lens 1. Specifically, the focal length f3 is preferably in a range of 0.8 times to 1.2 times the focal length f. In other words, it is preferable that the following relational expression be satisfied: $0.8 \leq f 3 / f \leq 1.2 .$ The configuration which satisfies the relational expression makes it possible to obtain a good resolution over a large area in an image circle. In other words, it is possible to obtain a good resolution over the entire area of an image sensor in the class of a pixel pitch of approximately 12 µm and 640 × 480 pixels (VGA), 640 × 512 pixels (VGA+), or the like, which image sensor has a detection surface relatively large for an image sensor used in an infrared region at a wavelength of approximately 7 µm to 14 µm.

The focal length f3 of the third lens L3 being approximately equal to the focal length f of the infrared imaging lens 1 indicates that contributions of the first lens L1 and the second lens L2 to the focal length f of the entire system are very small. By employing a configuration in which (i) only the third lens L3 greatly contributes to the focal length f and (ii) the first lens L1 and the second lens L2 mainly contribute to aberration removal, it is possible to provide an infrared imaging lens which can achieve a good resolution over the entire area of such a large detection surface.

More preferably, the focal length f3 of the third lens L3 is in a range of 0.9 times to 1.2 times the focal length f of the infrared imaging lens. In other words, it is more preferable that the first lens L1, the second lens L2, and the third lens L3 be configured to satisfy the following relational expression: $0.9 \leq f 3 / f \leq 1.2 .$

Further, the infrared imaging lens 1 in accordance with the present embodiment has a total lens length L which is preferably within a range of 1.0 times to 2.5 times the focal length f of the infrared imaging lens. In other words, it is preferable that the following relational expression be satisfied: $1.0 \leq L / f \leq 2.5 .$

Note here that the total lens length is an actual distance, as measured along the optical axis, between (i) an object-side end of a lens that is closest to the object, the object-side end being within the effective diameter of the lens and (ii) the image surface S.

More preferably, the total lens length L of the infrared imaging lens is in a range of 1.1 times to 2.3 times the focal length f of the infrared imaging lens. In other words, it is more preferable that the first lens L1, the second lens L2, and the third lens L3 be configured to satisfy the following relational expression: $1.1 \leq L / f \leq 2.3 .$

This configuration makes it possible to provide a compact standard lens.

Thus, a configuration is employed in which the total lens length L is not too greater than the focal length f, while the focal length f3 of the third lens L3 is approximately equal to the focal length f of the infrared imaging lens 1. The configuration makes it possible to provide an infrared imaging lens which is a standard lens and is excellent in various properties such as aberration properties, resolution, and peripheral light quantity while being compact.

In the infrared imaging lens 1 in accordance with the present embodiment, it is preferable that a back focus BF be not less than 0.5 times the focal length f of the infrared imaging lens 1. In other words, it is preferable that the following relational expression be satisfied: $0.5 \leq BF / f .$

The back focus BF is more preferably not less than 0.65 times the focal length f of the infrared imaging lens 1. In other words, it is more preferable that the first lens L1, the second lens L2, and the third lens L3 be configured to satisfy the following relational expression: $0.65 \leq BF / f .$

This configuration makes it possible to provide a standard lens in which a sufficient back focus is secured and which is compact.

The infrared imaging lens 1 in accordance with the present embodiment is preferably configured such that the focal length of the infrared imaging lens is specifically in a range of 7 mm to 12 mm. This configuration makes it possible to provide an infrared imaging lens which is a standard lens and is compact and widely available for commercial use while being excellent in various properties such as aberration properties, resolution, and peripheral light quantity.

Further, the infrared imaging lens 1 in accordance with the present embodiment is preferably configured such that the total lens length of the infrared imaging lens is specifically not more than 30 mm. This configuration makes it possible to provide an infrared imaging lens which is a standard lens and is compact and widely available for commercial use while being excellent in various properties such as aberration properties, resolution, and peripheral light quantity.

### <Configuration of infrared camera>

An infrared camera of the present disclosure includes the infrared imaging lens 1 described above and an image sensor which can handle an infrared region including at least a wavelength in a range of 7 µm to 14 µm. The image sensor is disposed such that the imaging surface is located at the position of the image surface S of the infrared imaging lens 1.

In order to have a performance capability compatible with the resolution of the infrared imaging lens 1, the image sensor preferably has a pixel pitch of 7 µm to 14 µm, which is approximately equivalent to a wavelength of infrared radiation. In particular, the pixel pitch is preferably 9 µm to 12 µm. It is preferable that the image sensor have a diagonal length of 7 mm to 11 mm in order to efficiently use the image circle diameter φs of the infrared imaging lens 1. Needless to say, however, the image sensor included in the infrared camera of the present disclosure can be an image sensor having a diagonal length smaller than the above diagonal length.

### <Numerical Example 1>

The following description will discuss a numerical example of the infrared imaging lens 1. A cross-sectional view of the infrared imaging lens in accordance with Numerical Example 1 is as illustrated in Fig. 1. In Numerical Example 1, r represents a radius of curvature, d represents an inter-surface distance on the optical axis, and ED represents an effective diameter (diameter). The unit of length is (mm). The symbol "*" (asterisk) following a number of the surface number represents an aspherical surface. Basic lens data, aspherical surface data, diffractive surface data, and various data are shown below.

**[Table 1]**

| Numerical Example 1 | Basic lens data | | | | | |
|---|---|---|---|---|---|---|
| Surface number | r (mm) | d (mm) | | N10 | V10 | ED (mm) |
| Object surface | | ∞ | | | | |
| 1 | 12.77927 | 3.90000 | | 3.46501 | 253 | 9.011 |
| 2* | 12.71081 | 1.72148 | | | | 8.006 |
| 3* | -27.04478 | 3.65000 | | 3.46501 | 253 | 8.238 |
| 4* (Diffractive surface) | -22.98231 | 1.19971 | | | | 11.324 |
| 5 | -15.06204 | 3.50000 | | 3.46501 | 253 | 12.510 |
| 6* | -10.87695 | 5.82053 | #1 | | | 14.768 |
| 7 | ∞ | 0.63000 | | 3.41776 | 3129 | 11.525 |
| 8 | ∞ | 0.50000 | | | | 11.432 |
| Image surface | | | | | | |
| | | | #1 Variable by focusing | | | |

A refractive index and an Abbe number V10 are as defined below.
N8: a refractive index measured at a wavelength of 8 µm
N10: a refractive index measured at a wavelength of 10 µm
N12: a refractive index measured at a wavelength of 12 µm $V 10 = \left(N10-1\right) / \left(N8-N12\right)$

**[Table 2]**

| Numerical Example 1 | | Aspherical surface data | | | |
|---|---|---|---|---|---|
| Coefficient | Second surface | | Third surface | Fourth surface | Sixth surface |
| K | 0.0000000E+00 | | 0.0000000E+00 | 0.0000000E+00 | 0.0000000E+00 |
| A2 | 0.0000000E+00 | | 0.0000000E+00 | 0.0000000E+00 | 0.0000000E+00 |
| A4 | -1.5359185E-05 | | -5.0014179E-04 | 0.0000000E+00 | 2.4998352E-05 |
| A6 | -4.8381278E-06 | | -1.3533520E-05 | 0.0000000E+00 | -1.3907450E-06 |
| A8 | -6.4632990E-09 | | -1.9123885E-07 | 0.0000000E+00 | 1.4303773E-08 |
| A10 | -6.8432841E-09 | | -3.2750134E-08 | 0.0000000E+00 | -1.3309061E-10 |

An aspherical shape is as defined below. $Z = \frac{{h}^{2} / r}{1 + \sqrt{1 - \left(1+κ\right) {\left(h/r\right)}^{2}}} + \sum {A}_{n} {h}^{n}$
h: Height from optical axis
r: Vertex radius of curvature
k: Conic constant
An: n-th non-curved surface coefficient (n is an even number)
Z: Distance at h from point on aspherical surface to tangential plane of aspherical surface vertex

**[Table 3]**

| Numerical Example 1 | | Diffractive surface data |
|---|---|---|
| Coefficient | Fourth surface | |
| P1 | -6.4818464E-01 | |
| P2 | -3.8289591E-04 | |

A diffractive surface is as defined below. $Φ = {P}_{1} \times {h}^{2} + {P}_{2} \times {h}^{4}$ ${Z}_{dif} = \frac{λ}{2 π} Φ$ ${Z}_{DOE} = \frac{1}{\left(N-1\right)} \times MOD \left({Z}_{dif},-λ\right)$
Φ: Phase difference function
P₁, P₂: Phase coefficient
Z_{dif}: Optical path function
Z_{DOE}: Sag amount of diffractive surface
λ: Design center wavelength (assumed to be 10 µm)

**[Table 4]**

| Numerical Example 1 | Various data | |
|---|---|---|
| Position of aperture diaphragm: | | Corresponding to first surface. Aperture diameter Φ: 9.011 mm |
| F-number: | | 1.0 |
| Maximum half angle of view: | | 29.8° |
| Maximum image height: | | 4.92 mm |
| Entire system focal length: | | 9.011 mm |
| Back focus: | | 6.9505 mm (d6+d7+d8) |
| Total lens length: | | 20.9217 mm |

The first lens L1, the second lens L2, and the third lens L3 are each made of chalcogenide glass having a refractive index N10 of 3.465 measured at a wavelength of 10 µm. The parallel flat plate P is made of silicon (Si). The image surface S-side surface (fourth surface) of the second lens L2 is a diffractive surface obtained by forming a sag on a spherical surface. The sag has a depth in a range corresponding to 0 to the design center wavelength λ (see the definitional equation of Z_{DOE}). The back focus of 6.95 mm is an actual distance.

The first lens L1 has a focal length f1 of 24.35 mm. Thus, a ratio of the focal length f1 to the focal length f of the infrared imaging lens 1 is as follows. $f 1 / f = 2.7$

The second lens L2 has a focal length f2 of 37.87 mm. The third lens L3 has a focal length f3 of 9.96 mm. Thus, the third lens L3 and the first lens L1 have the highest power and the second highest power, respectively.

A maximum image height on the image surface S is 4.92 mm. As such, the image circle has a diameter φs of 9.84 mm. A ratio of the diameter φs of the image circle of the infrared imaging lens 1 to the focal length f of the infrared imaging lens 1 is as follows. $φs / f = 1.09$

That is, the infrared imaging lens 1 is a standard lens. Further, the infrared imaging lens 1 has a half angle of view of 29.8°. This is within a range of 21° to 36°, within which the infrared imaging lens 1 can be regarded as a standard lens.

The infrared imaging lens 1 is as compact as having (i) a total length of 20.9 mm as measured from the first surface to the image surface and (ii) a maximum effective diameter on an optical path of 14.8 mm. Further, the infrared imaging lens 1 has a triple-lens configuration and can be made lightweight. Combined with the fact that each lens can be press-molded, the infrared imaging lens 1 can be produced at a low cost that allows the infrared imaging lens 1 to be applied to a commercial use.

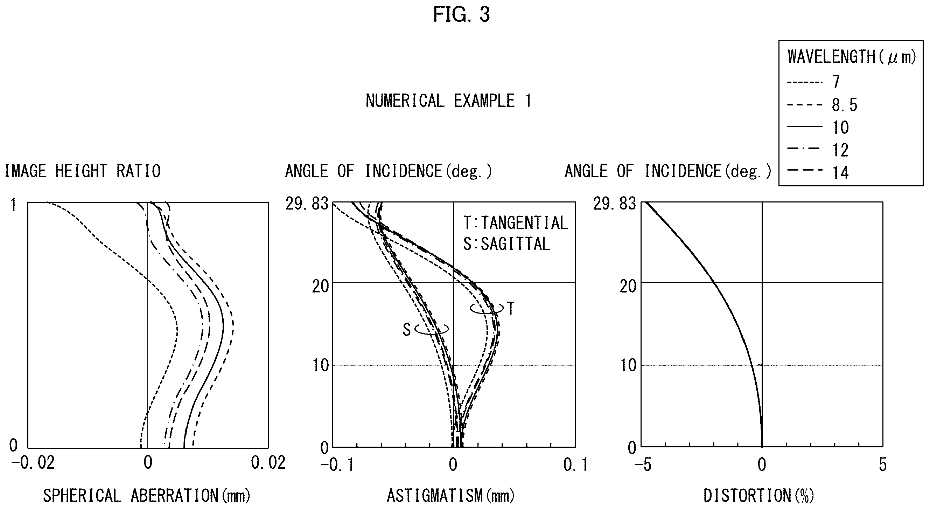

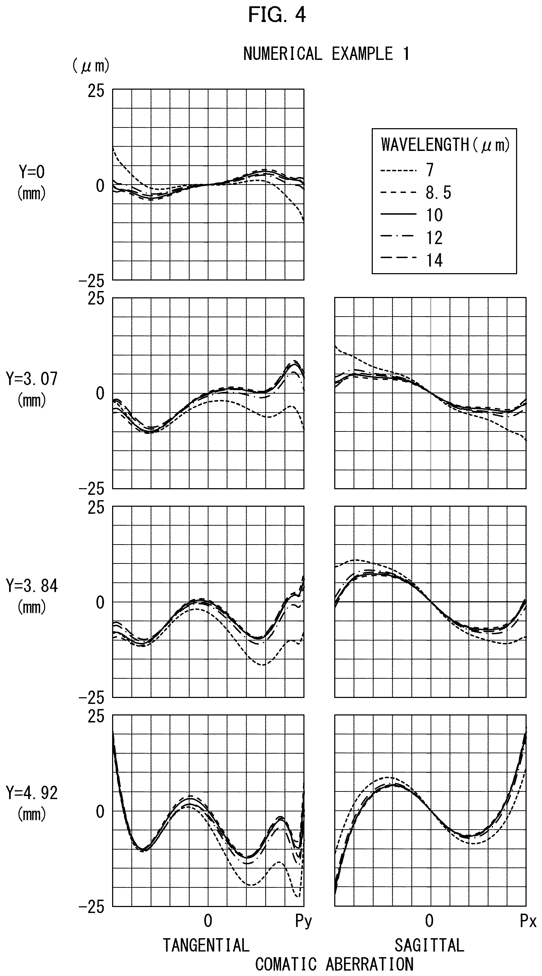

Various performance capabilities of the infrared imaging lens 1 of Numerical Example 1 are illustrated in Figs. 3 to 7. Fig. 3 is an aberration diagram of the infrared imaging lens 1. Fig. 3 illustrates spherical aberration, astigmatism, and distortion. For each of spherical aberration, astigmatism, and distortion, graphs corresponding to respective wavelengths ranging from 7 µm to 14 µm are shown. Fig. 4 is an aberration diagram illustrating comatic aberration at each image height Y ranging from 0 mm up to a maximum image height of 4.92 mm, for each of a tangential (meridional) direction and a sagittal (radial) direction. As illustrated in Figs. 3 and 4, the infrared imaging lens 1 in accordance with Numerical Example 1 has various types of aberration satisfactorily corrected over a wide wavelength region of 7 µm to 14 µm.

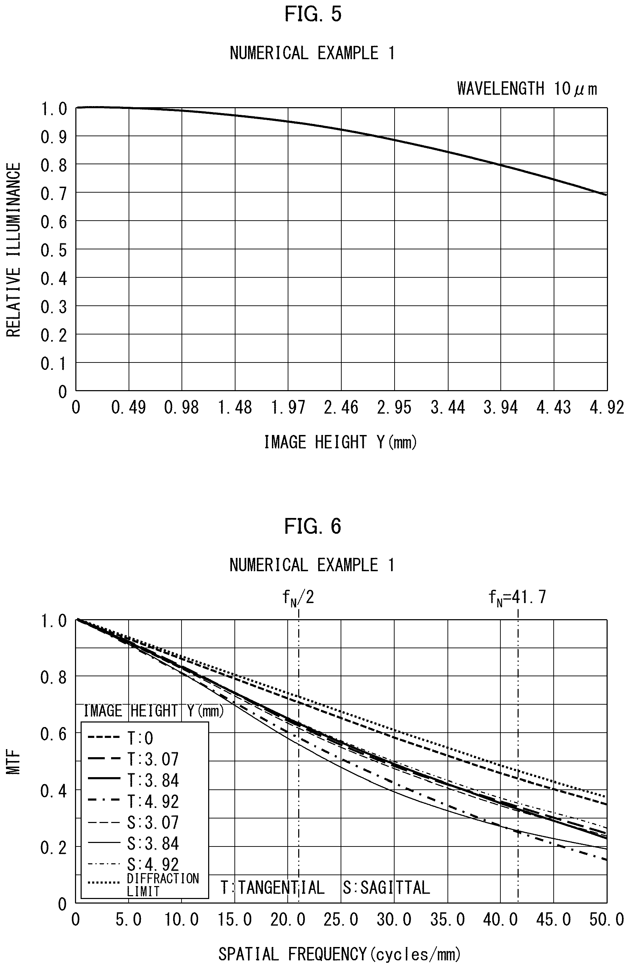

Fig. 5 is a graph showing a relative illuminance with respect to an image height Y of the infrared imaging lens 1 in accordance with Numerical Example 1. Note here that the relative illuminance refers to an illuminance ratio of a certain region to an on-optical axis region (image surface central region) on the image surface S. As illustrated in Fig. 5, even at a maximum image height of 4.92 mm, a satisfactory peripheral light quantity as much as a relative illuminance of 0.68 is obtained.

In a case where an image sensor having a 640 × 512 pixels (VGA+) and an effective diagonal length of 9.84 mm is used, an image height Y corresponding to a center of right and left ends of an imaging surface is 3.84 mm, and a relative illuminance at that image height is 0.80. Further, in this case, an image height Y corresponding to a center of upper and lower ends of the imaging surface is 3.07 mm, and a relative illuminance at that image height is 0.87.

Fig. 6 is a graph showing spatial frequency dependence of an MTF in a wavelength range of 7 µm to 14 µm. As described above, an image sensor having a pixel pitch of 12 µm has a Nyquist frequency f_{N} of 41.7 cycles/mm, which is shown in Fig. 6. A half value f_{N}/2 thereof (20.85 cycles/mm) is also shown in Fig. 6.

At the spatial frequency of 41.7 cycles/mm, an MTF of not less than 0.24, which is sufficiently higher than 0.17, is secured at each image height Y. At this time, at an image height Y of 0 mm, that is, at a center of the image, a good resolution as high as an MTF of 0.43 is exhibited. At the spatial frequency of 20.85 cycles/mm, an MTF of not less than 0.56, which is sufficiently higher than 0.50, is secured at each image height Y. The infrared imaging lens 1 in accordance with Numerical Example 1 exhibits, over the entire area of the image circle, a good resolution suited to an image sensor having a narrow pixel pitch approximately equivalent to a wavelength.

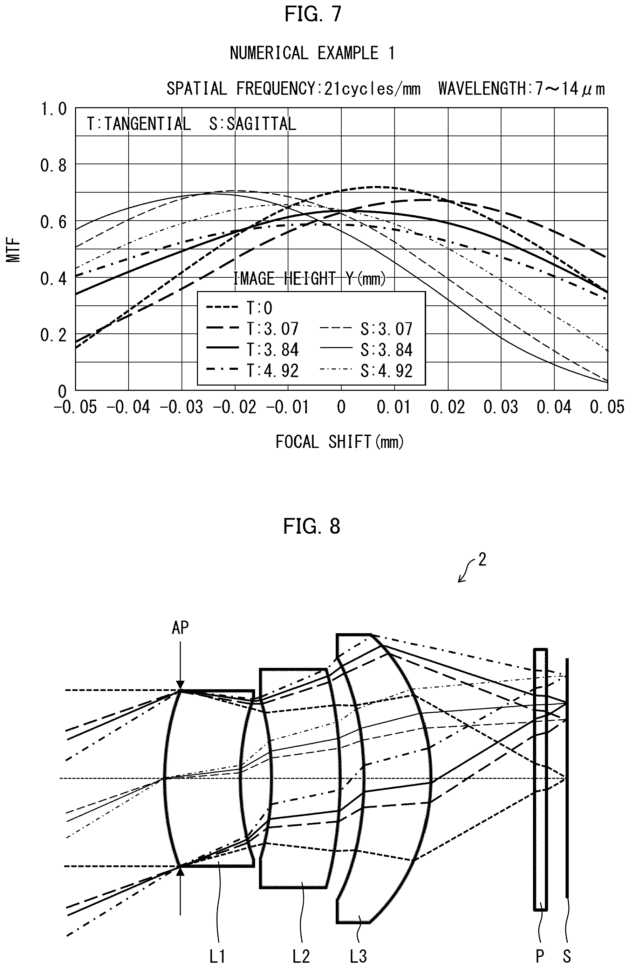

Fig. 7 is a graph showing a change, with respect to a focal shift, in MTF in a wavelength range of 7 µm to 14 µm. As described above, the infrared imaging lens 1 in accordance with Numerical Example 1 can cover a wavelength range of 7 µm to 14 µm and has a good resolution sufficiently suited to an image sensor having a pixel pitch of approximately 12 µm. Further, the infrared imaging lens 1 in accordance with Numerical Example 1 is as bright as having an F-number of 1.0, and is compact. The present embodiment thus makes it possible to provide an infrared imaging lens which, unlike conventional infrared imaging lenses, is compact and has excellent properties.

In Numerical Example 1, a ratio of the focal length f3 of the third lens L3 to the focal length f of the infrared imaging lens is as follows. $f 3 / f = 1.1$

The focal length f3 of the third lens L3 is thus set approximately equal to the focal length f of the infrared imaging lens.

In Numerical Example 1, a ratio of the total lens length L of the infrared imaging lens to the focal length f of the infrared imaging lens is as follows. $L / f = 2.3$

The infrared imaging lens is thus configured such that the total lens length L is not too greater than the focal length f.

In Numerical Example 1, a ratio of the back focus BF to the focal length f of the infrared imaging lens is as follows. $BF / f = 0.77$

Thus, a sufficient back focus is secured.

### <Numerical Example 2>

The following description will discuss another numerical example of the infrared imaging lens. For convenience of explanation, the same reference numerals will be given to members having the same functions as the members described in the above examples and the description will not be repeated. A cross-section of an infrared imaging lens 2 in accordance with Numerical Example 2 is illustrated in an optical path diagram of Fig. 8.

The infrared imaging lens 2 in accordance with Numerical Example 2 is an imaging lens which is optimized to satisfactorily form an image of infrared radiation in a wavelength range of 7.5 µm to 13.5 µm and which has an F-number of 1.0. The infrared imaging lens 2 has a design center wavelength of 10 µm. Basic lens data, aspherical surface data, diffractive surface data, and various data are shown below.

**[Table 5]**

| Numerical Example 2 | Basic lens data | | | | | |
|---|---|---|---|---|---|---|
| Surface number | r (mm) | d (mm) | | N10 | V10 | ED (mm) |
| Object surface | | ∞ | | | | |
| 1 | 12.54323 | 3.90000 | | 3.46501 | 253 | 9.010 |
| 2* | 12.31696 | 1.62416 | | | | 7.965 |
| 3* | -27.34873 | 3.50932 | | 3.46501 | 253 | 8.121 |
| 4 | -23.25500 | 1.22385 | | | | 11.079 |
| 5* (Diffractive surface) | -14.76878 | 3.40454 | | 3.46501 | 253 | 12.334 |
| 6* | -10.70036 | 5.85249 | #1 | | | 14.533 |
| 7 | ∞ | 0.63000 | | 3.41776 | 3129 | 11.110 |
| 8 | ∞ | 0.50000 | | | | 11.022 |
| Image surface | | | | | | 9.893 |
| | | | #1 Variable by focusing | | | |

**[Table 6]**

| Numerical Example 2 | | Aspherical surface data | | | |
|---|---|---|---|---|---|
| Coefficient | Second surface | | Third surface | Fifth surface | Sixth surface |
| K | 0.0000000E+00 | | 0.0000000E+00 | 0.0000000E+00 | 0.0000000E+00 |
| A2 | 0.0000000E+00 | | 0.0000000E+00 | 0.0000000E+00 | 0.0000000E+00 |
| A4 | 7.8075520E-06 | | -5.0365522E-04 | 0.0000000E+00 | 1.9784940E-05 |
| A6 | -1.09755495E-05 | | -1.8917989E-05 | 0.0000000E+00 | -1.3049319E-06 |
| A8 | 4.4633727E-07 | | 1.9266483E-07 | 0.0000000E+00 | 1.0457411E-08 |
| A10 | -2.4232467E-08 | | -5.4098741E-08 | 0.0000000E+00 | -1.1278416E-10 |

**[Table 7]**

| Numerical Example 2 | | Diffractive surface data |
|---|---|---|
| Coefficient | Fifth surface | |
| P1 | -6.0201136E-01 | |
| P2 | 5.1361241E-04 | |

**[Table 8]**

| Numerical Example 2 | Various data | |
|---|---|---|
| Position of aperture diaphragm: | | Corresponding to first surface. Aperture diameter Φ: 9.01 mm |
| F-number: | | 1.0 |
| Maximum half angle of view: | | 29.9° |
| Maximum image height: | | 4.92 mm |
| Entire system focal length: | | 9.01 mm |
| Back focus: | | 6.98 mm (d6+d7+d8) |
| Total lens length: | | 20.64 mm |

The first lens L1, the second lens L2, and the third lens L3 are each made of chalcogenide glass having a refractive index N10 of 3.465 measured at a wavelength of 10 µm. The parallel flat plate P is made of silicon (Si). The object-side surface (fifth surface) of the third lens L3 is a diffractive surface obtained by forming a sag on a spherical surface. The sag has a depth in a range corresponding to 0 to a design center wavelength (see the definitional equation of Z_{DOE}). The back focus of 6.98 mm is an actual distance.

The first lens L1 has a focal length f1 of 24.60 mm. Thus, a ratio of the focal length f1 to the focal length f of the infrared imaging lens 2 is as follows. $f 1 / f = 2.7$

The second lens L2 has a focal length f2 of 39.15 mm. The third lens L3 has a focal length f3 of 9.88 mm. Thus, the third lens L3 and the first lens L1 have the highest power and the second highest power, respectively. A ratio of the focal length f3 of the third lens L3 to the focal length f of the infrared imaging lens is as follows. $f 3 / f = 1.1$

The focal length f3 of the third lens L3 is set approximately equal to the focal length f of the infrared imaging lens.

A maximum image height on the image surface S is 4.92 mm. As such, the image circle has a diameter φs of 9.84 mm. A ratio of the diameter φs of the image circle of the infrared imaging lens 2 to the focal length f of the infrared imaging lens 2 is as follows. $φs / f = 1.09$

That is, the infrared imaging lens 2 is a standard lens. Further, the infrared imaging lens 2 has a half angle of view of 29.9°. This is within a range of 21° to 36°, within which the infrared imaging lens 2 can be regarded as a standard lens.

The infrared imaging lens 2 is as compact as having (i) a total lens length L of 20.6 mm as measured from the first surface to the image surface and (ii) a maximum effective diameter on an optical path of 14.5 mm. A ratio of the total lens length L of the infrared imaging lens to the focal length f of the infrared imaging lens is as follows. $L / f = 2.3$

The infrared imaging lens is thus configured such that the total lens length L is not too greater than the focal length f.

Further, the infrared imaging lens 2 has a triple-lens configuration and can be made lightweight. Combined with the fact that each lens can be press-molded, the infrared imaging lens 2 can be produced at a low cost that allows the infrared imaging lens 2 to be applied to a commercial use.

In Numerical Example 2, a ratio of the back focus BF to the focal length f of the infrared imaging lens is as follows. $BF / f = 0.77$

Thus, a sufficient back focus is secured.

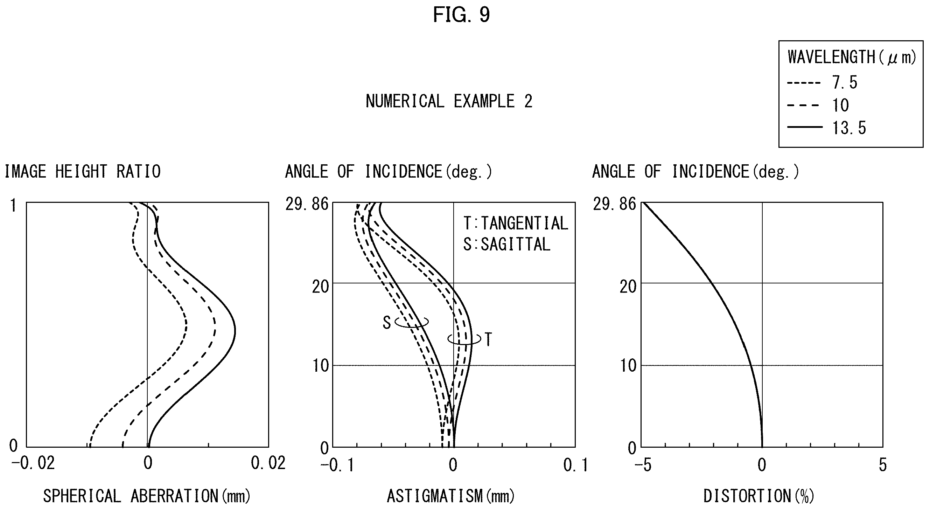

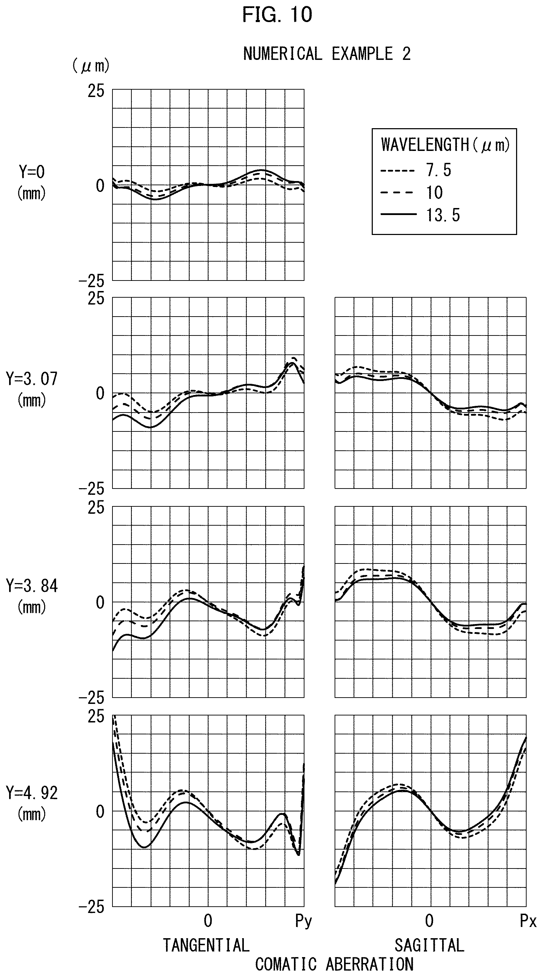

Various performance capabilities of the infrared imaging lens 2 of Numerical Example 2 are illustrated in Figs. 9 to 13. Fig. 9 is an aberration diagram of the infrared imaging lens 2. Fig. 9 illustrates spherical aberration, astigmatism, and distortion. For each, graphs corresponding to respective wavelengths ranging from 7.5 µm to 13.5 µm are shown. Fig. 10 is an aberration diagram illustrating comatic aberration at each image height Y ranging from 0 mm up to a maximum image height of 4.92 mm, for each of a tangential (meridional) direction and a sagittal (radial) direction. As illustrated in Figs. 9 and 10, the infrared imaging lens 2 in accordance with Numerical Example 2 has various types of aberration satisfactorily corrected over a wide wavelength region of 7.5 µm to 13.5 µm.

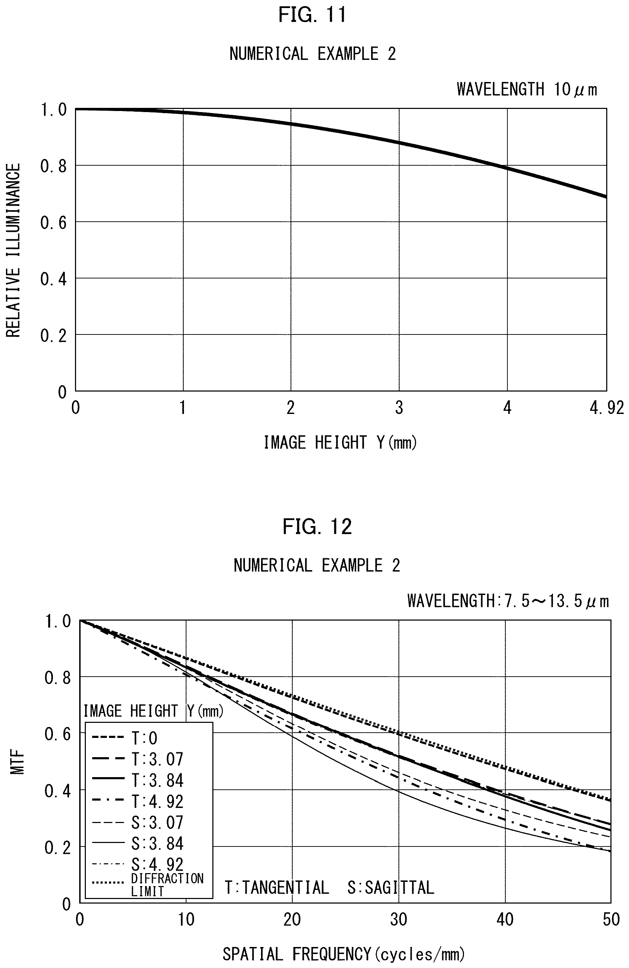

Fig. 11 is a graph showing a relative illuminance with respect to an image height Y of the infrared imaging lens 2 in accordance with Numerical Example 2. As illustrated in Fig. 11, even at a maximum image height of 4.92 mm, a satisfactory peripheral light quantity as much as a relative illuminance of 0.69 is obtained.

In a case where an image sensor having a 640 × 512 pixels (VGA+) and an effective diagonal length of 9.84 mm is used, an image height Y corresponding to a center of right and left ends of an imaging surface is 3.84 mm, and a relative illuminance at that image height is 0.81. Further, in this case, an image height Y corresponding to a center of upper and lower ends of the imaging surface is 3.07 mm, and a relative illuminance at that image height is 0.87.

Fig. 12 is a graph showing spatial frequency dependence of an MTF in a wavelength range of 7.5 µm to 13.5 µm. At a spatial frequency of 41.7 cycles/mm corresponding to a pixel pitch of 12 µm, an MTF of not less than 0.30, which is sufficiently higher than 0.17, is secured at each image height Y in terms of a simple average of an MTF in the tangential direction and an MTF in the sagittal direction. At this time, at an image height Y of 0 mm, that is, at a center of the image, a good resolution as high as an MTF of 0.45 is exhibited.

Further, at a spatial frequency of 20.85 cycles/mm, an MTF of not less than 0.60, which is sufficiently higher than 0.50, is secured at each image height Y in terms of a simple average of an MTF in the tangential direction and an MTF in the sagittal direction. The infrared imaging lens 2 in accordance with Numerical Example 2 exhibits, over the entire area of the image circle, a good resolution suited to an image sensor having a narrow pixel pitch approximately equivalent to a wavelength.

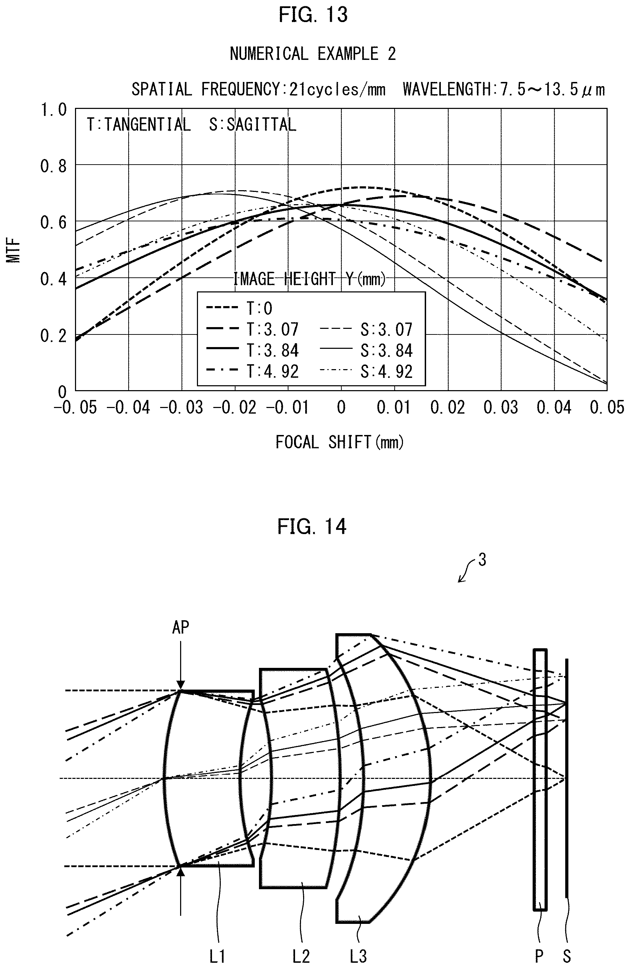

Fig. 13 is a graph showing a change, with respect to a focal shift, in MTF in a wavelength range of 7.5 µm to 13.5 µm. As described above, the infrared imaging lens 2 in accordance with Numerical Example 2 can cover a wavelength range of 7.5 µm to 13.5 µm and has a good resolution sufficiently suited to an image sensor having a pixel pitch of approximately 12 µm. Further, the infrared imaging lens 2 in accordance with Numerical Example 2 is as bright as having an F-number of 1.0, and is compact. Numerical Example 2 thus makes it possible to provide an infrared imaging lens which, unlike conventional infrared imaging lenses, is compact and has excellent properties.

### <Numerical Example 3>

A cross-section of the infrared imaging lens 3 in accordance with Numerical Example 3 is illustrated in an optical path diagram of Fig. 14. The infrared imaging lens 3 in accordance with Numerical Example 3 is an imaging lens which is optimized to satisfactorily form an image of infrared radiation in a wavelength range of 7 µm to 14 µm and which has an F-number of 1.2. The infrared imaging lens 3 has a design center wavelength of 10 µm. Basic lens data, aspherical surface data, diffractive surface data, and various data are shown below.

**[Table 9]**

| Numerical Example 3 | Basic lens data | | | | | |
|---|---|---|---|---|---|---|
| Surface number | r (mm) | d (mm) | | N10 | V10 | ED (mm) |
| Object surface | | ∞ | | | | |
| 1 | 12.58944 | 3.90000 | | 3.46501 | 253 | 9.010 |
| 2* | 12.44559 | 1.51240 | | | | 7.965 |
| 3* | -26.31964 | 3.42200 | | 3.46501 | 253 | 8.121 |
| 4 | -23.18400 | 1.23672 | | | | 11.079 |
| 5* (Diffractive surface) | -14.44552 | 3.48261 | | 3.46501 | 253 | 12.334 |
| 6* | -10.57879 | 5.94990 | #1 | | | 14.533 |
| 7 | ∞ | 0.63000 | | 3.41776 | 3129 | 11.210 |
| 8 | ∞ | 0.50000 | | | | 11.122 |
| Image surface | | | | | | 9.893 |
| | | | #1 Variable by focusing | | | |

**[Table 10]**

| Numerical Example 3 | | Aspherical surface data | | | |
|---|---|---|---|---|---|
| Coefficient | Second surface | | Third surface | Fifth surface | Sixth surface |
| K | 0.0000000E+00 | | 0.0000000E+00 | 0.0000000E+00 | 0.0000000E+00 |
| A2 | 0.0000000E+00 | | 0.0000000E+00 | 0.0000000E+00 | 0.0000000E+00 |
| A4 | -2.6458828E-05 | | -5.2511063E-04 | 0.0000000E+00 | 2.0618832E-05 |
| A6 | -9.7898605E-06 | | -2.1389993E-05 | 0.0000000E+00 | -1.2607664E-06 |
| A8 | 2.6499652E-07 | | 1.5720631E-07 | 0.0000000E+00 | 1.0406458E-08 |
| A10 | -2.1082302E-08 | | -5.3920974E-08 | 0.0000000E+00 | -9.4385126E-11 |

**[Table 11]**

| Numerical Example 3 | | Diffractive surface data |
|---|---|---|
| Coefficient | | Fifth surface |
| | P1 | -6.1617880E-01 |
| | P2 | 6.1002647E-04 |

**[Table 12]**

| Numerical Example 3 Various data | |
|---|---|
| Position of aperture diaphragm: | Corresponding to first surface. Aperture diameter Φ: 9.01 mm |
| F-number: | 1.2 |
| Maximum half angle of view: | 29.9° |
| Maximum image height: | 4.92 mm |
| Entire system focal length: | 9.01 mm |
| Back focus: | 7.08 mm (d6+d7+d8) |
| Total lens length: | 20.63 mm |

The first lens L1, the second lens L2, and the third lens L3 are each made of chalcogenide glass having a refractive index N10 of 3.465 measured at a wavelength of 10 µm. The parallel flat plate P is made of silicon (Si). The object-side surface (fifth surface) of the third lens L3 is a diffractive surface obtained by forming a sag on a spherical surface. The sag has a depth in a range corresponding to 0 to a design center wavelength (see the definitional equation of Z_{DOE}). The back focus of 7.08 mm is an actual distance.

The first lens L1 has a focal length f1 of 24.16 mm. Thus, a ratio of the focal length f1 to the focal length f of the infrared imaging lens 3 is as follows. $f 1 / f = 2.7$

The second lens L2 has a focal length f2 of 44.44 mm. The third lens L3 has a focal length f3 of 9.77 mm. Thus, the third lens L3 and the first lens L1 have the highest power and the second highest power, respectively. A ratio of the focal length f3 of the third lens L3 to the focal length f of the infrared imaging lens 3 is as follows. $f 3 / f = 1.1$

A maximum image height on the image surface S is 4.92 mm. As such, the image circle has a diameter φs of 9.84 mm. A ratio of the diameter φs of the image circle of the infrared imaging lens 3 to the focal length f of the infrared imaging lens 3 is as follows. $φs / f = 1.09$

That is, the infrared imaging lens 3 is a standard lens. Further, the infrared imaging lens 3 has a half angle of view of 29.9°. This is within a range of 21° to 36°, within which the infrared imaging lens 3 can be regarded as a standard lens.

The infrared imaging lens 3 is as compact as having (i) a total lens length L of 20.6 mm as measured from the first surface to the image surface S and (ii) a maximum effective diameter on an optical path of 14.5 mm. A ratio of the total lens length L of the infrared imaging lens to the focal length f of the infrared imaging lens is as follows. $L / f = 2.3$

The infrared imaging lens is thus configured such that the total lens length L is not too greater than the focal length f.

Further, the infrared imaging lens 3 has a triple-lens configuration and can be made lightweight. Combined with the fact that each lens can be press-molded, the infrared imaging lens 3 can be produced at a low cost that allows the infrared imaging lens 3 to be applied to a commercial use.

In Numerical Example 3, a ratio of the back focus BF to the focal length f of the infrared imaging lens is as follows. $BF / f = 0.79$

Thus, a sufficient back focus is secured.

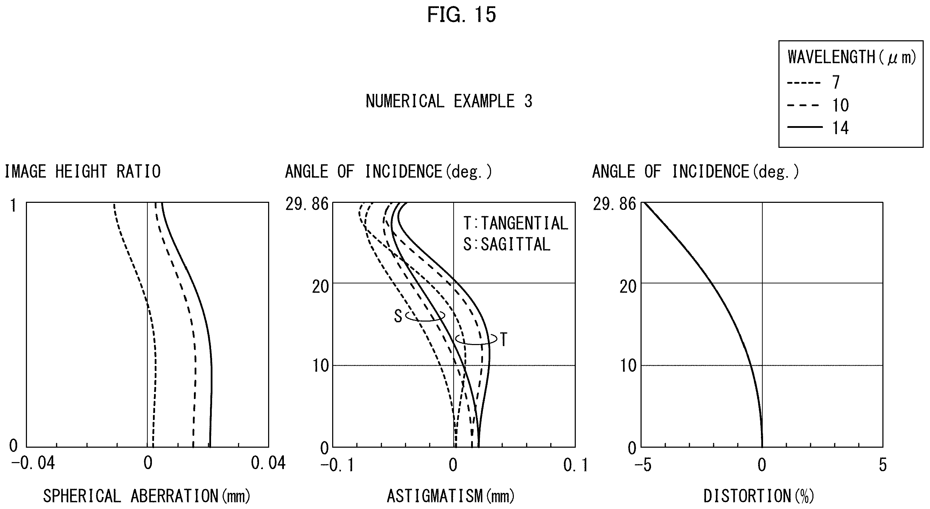

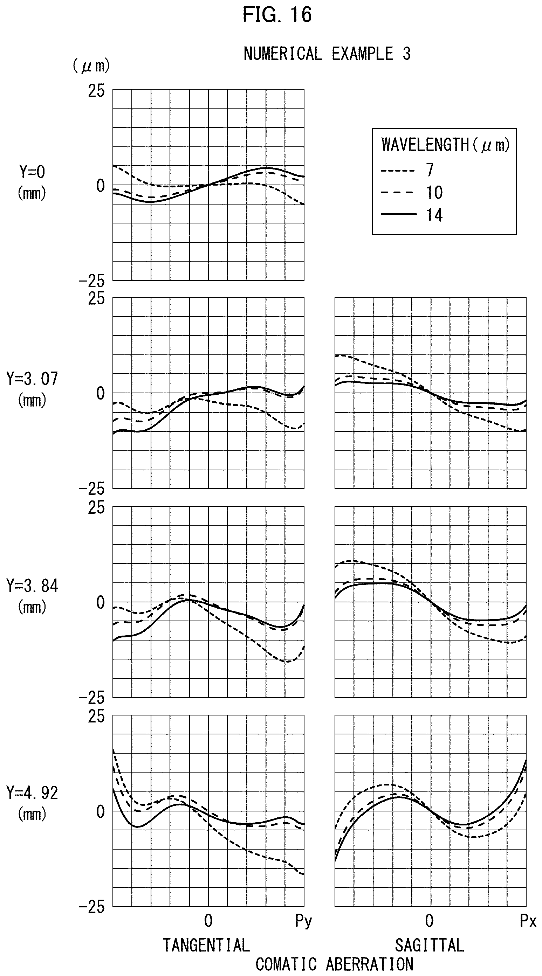

Various performance capabilities of the infrared imaging lens 3 of Numerical Example 3 are illustrated in Figs. 15 to 19. Fig. 15 is an aberration diagram of the infrared imaging lens 3. Fig. 15 illustrates spherical aberration, astigmatism, and distortion. For each, graphs corresponding to respective wavelengths ranging from 7 µm to 14 µm are shown. Fig. 16 is an aberration diagram illustrating comatic aberration at each image height Y ranging from 0 mm up to a maximum image height of 4.92 mm, for each of a tangential (meridional) direction and a sagittal (radial) direction. As illustrated in Figs. 15 and 16, the infrared imaging lens 3 in accordance with Numerical Example 3 has various types of aberration satisfactorily corrected over a wide wavelength region of 7 µm to 14 µm.

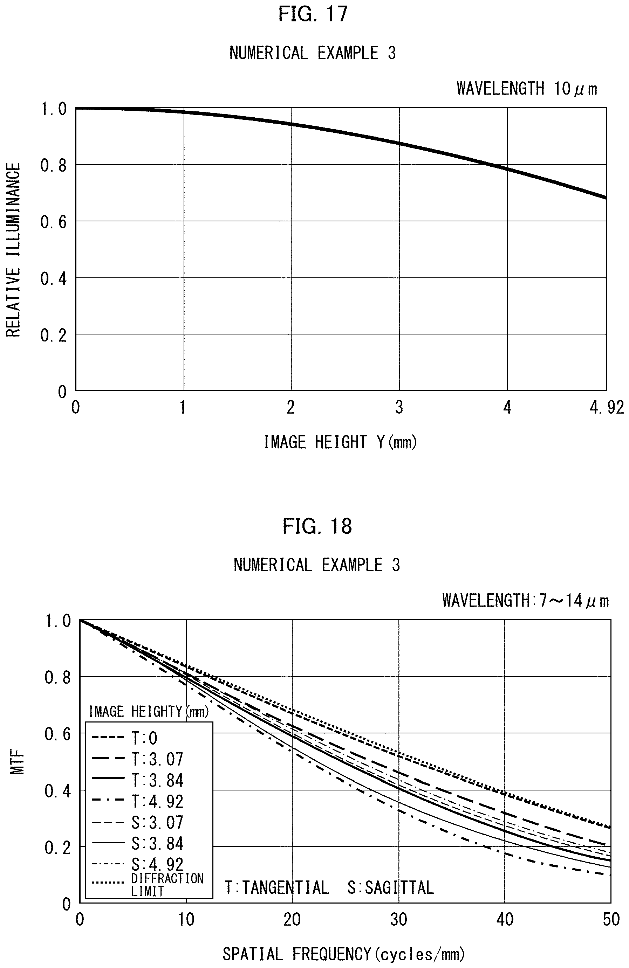

Fig. 17 is a graph showing a relative illuminance with respect to an image height Y of the infrared imaging lens 3 in accordance with Numerical Example 3. As illustrated in Fig. 17, even at a maximum image height of 4.92 mm, a satisfactory peripheral light quantity as much as a relative illuminance of 0.68 is obtained.

In a case where an image sensor having a 640 × 512 pixels (VGA+) and an effective diagonal length of 9.84 mm is used, an image height Y corresponding to a center of right and left ends of an imaging surface is 3.84 mm, and a relative illuminance at that image height is 0.80. Further, in this case, an image height Y corresponding to a center of upper and lower ends of the imaging surface is 3.07 mm, and a relative illuminance at that image height is 0.87.

Fig. 18 is a graph showing spatial frequency dependence of an MTF in a wavelength range of 8 µm to 14 µm. At a spatial frequency of 41.7 cycles/mm corresponding to a pixel pitch of 12 µm, an MTF of not less than 0.21, which is sufficiently higher than 0.17, is secured at each image height Y in terms of a simple average of an MTF in the tangential direction and an MTF in the sagittal direction. At this time, at an image height Y of 0 mm, that is, at a center of the image, a good resolution as high as an MTF of 0.36 is exhibited.

Further, at a spatial frequency of 20.85 cycles/mm, an MTF of not less than 0.55, which is sufficiently higher than 0.50, is secured at each image height Y in terms of a simple average of an MTF in the tangential direction and an MTF in the sagittal direction. The infrared imaging lens 3 in accordance with Numerical Example 3 exhibits, over the entire area of the image circle, a resolution that is suited to an image sensor having a narrow pixel pitch approximately equivalent to a wavelength and that is considered good as a resolution of an infrared imaging lens having an F-number of 1.2.

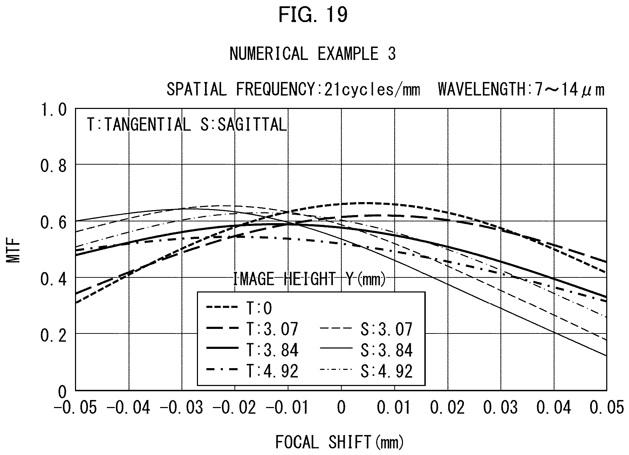

Fig. 19 is a graph showing a change, with respect to a focal shift, in MTF in a wavelength range of 7 µm to 14 µm. Further, the infrared imaging lens 3 in accordance with Numerical Example 3 is designed to have an F-number of 1.2, which is greater than an F-number of the infrared imaging lens in accordance with Numerical Example 1. This makes it possible to obtain a deeper focal depth.

As described above, the infrared imaging lens 3 in accordance with Numerical Example 3 can cover a wavelength range of 7 µm to 14 µm and has a good resolution sufficiently suited to an image sensor having a pixel pitch of approximately 12 µm. Further, the infrared imaging lens 3 in accordance with Numerical Example 3 is as bright as having an F-number of 1.2, and is compact. Numerical Example 3 thus makes it possible to provide an infrared imaging lens which, unlike conventional infrared imaging lenses, is compact and has excellent properties.

Aspects of the present invention can also be expressed as follows:
A first aspect of the present invention is an infrared imaging lens including a plurality of lenses which are disposed in respective positions, the plurality of lenses each being made of glass having a refractive index of 2.8 to 4.0 measured at a wavelength of 10 µm, the infrared imaging lens having an image circle having a diameter which is 0.7 times to 1.3 times a focal length of the infrared imaging lens. The configuration makes it possible to provide an infrared imaging lens which is compatible with an image sensor having a pixel pitch approximately equivalent to a wavelength, which is excellent in resolution, and which is a standard lens.

In a second aspect of the present invention, the infrared imaging lens in accordance with the first aspect can be configured such that the infrared imaging lens has, in the image circle, a modulation transfer function of not less than 0.17 in a wavelength range of 7 µm to 14 µm at a spatial frequency of 41.7 cycles/mm. With the configuration, a relationship between the pixel pitch approximately equivalent to a wavelength and the resolution is more specifically limited.

A third aspect of the present invention is an infrared imaging lens including a plurality of lenses which are disposed in respective positions, the plurality of lenses each being made of glass having a refractive index of 2.8 to 4.0 measured at a wavelength of 10 µm, the infrared imaging lens having, in the image circle, a modulation transfer function of not less than 0.17 in a wavelength range of 7 µm to 14 µm at a spatial frequency of 41.7 cycles/mm. The configuration makes it possible to provide an infrared imaging lens which is compatible with an image sensor having a pixel pitch approximately equivalent to a wavelength, which is excellent in resolution, and which is a standard lens.

In a fourth aspect of the present invention, the infrared imaging lens in accordance with any one of the first to third aspects can be configured such that a first lens disposed closest to an object side has positive power and a meniscus shape that is convex to the object side. The configuration makes it possible to provide an infrared imaging lens which is excellent in aberration properties.

In a fifth aspect of the present invention, the infrared imaging lens in accordance with the fourth aspect can be configured such that a focal length f1 of the first lens and a focal length f of the infrared imaging lens satisfy the following relational expression: $1.0 \leq f 1 / f \leq 2.9 .$

The configuration makes it possible to reduce an outer diameter and a volume of the infrared imaging lens.

In a sixth aspect of the present invention, the infrared imaging lens in accordance with the fourth or fifth aspect can be configured such that an effective diameter of an object-side surface of the first lens serves as an aperture of the infrared imaging lens. The configuration makes it possible to reduce vignetting of peripheral light beams and increase peripheral light quantity.

In a seventh aspect of the present invention, the infrared imaging lens in accordance with any one of the fourth to sixth aspects can be configured such that the first lens, a second lens, and a third lens are disposed in this order from the object side to an image surface side. The configuration allows an infrared imaging lens to be compact and lightweight while maintaining a high resolution.

In an eighth aspect of the present invention, the infrared imaging lens in accordance with the seventh aspect can be configured such that the second lens and the third lens each have positive power. The configuration makes it possible to provide an infrared imaging lens which is excellent in aberration properties.

In a ninth aspect of the present invention, the infrared imaging lens in accordance with the eighth aspect can be configured such that: the third lens has a highest power among the first lens, the second lens, and the third lens; and the third lens has a meniscus shape that is convex to the image surface side. The configuration reduces astigmatism.

In a tenth aspect of the present invention, the infrared imaging lens in accordance with any one of the seventh to ninth aspects can be configured such that the second lens has a meniscus shape that is convex to the image surface side. The configuration makes it possible to suppress an increase in Petzvar sum, so that field curvature is prevented or reduced.

In an eleventh aspect of the present invention, the infrared imaging lens in accordance with any one of the seventh to tenth aspects can be configured such that at least one of an image surface-side surface of the second lens and an object-side surface of the third lens is a diffractive surface. The configuration makes it possible to reduce transverse chromatic aberration.

In a twelfth aspect of the present invention, the infrared imaging lens in accordance with any one of the seventh to tenth aspects can be configured such that a focal length f3 of the third lens and a focal length f of the infrared imaging lens satisfy the following relational expression: $0.8 \leq f 3 / f \leq 1.2 .$

The configuration makes it possible to obtain a good resolution throughout the area of a large image circle.

In a thirteenth aspect of the present invention, the infrared imaging lens in accordance with any one of the first to twelfth aspects can be configured such that the infrared imaging lens has a half angle of view of 21° to 36°. The configuration allows an infrared imaging lens to have an angle of view that is preferable as an angle of view of a standard lens.

In a fourteenth aspect of the present invention, the infrared imaging lens in accordance with any one of the first to thirteenth aspects can be configured such that the infrared imaging lens has, in the image circle, a modulation transfer function of not less than 0.50 in a wavelength range of 7 µm to 14 µm at a spatial frequency of 20.85 cycles/mm. The configuration makes it possible to provide an infrared imaging lens having a good MTF over an entire range from a spatial frequency of 0 cycles/mm to 41.7 cycles/mm, which is equivalent to a targeted Nyquist frequency.

In a fifteenth aspect of the present invention, the infrared imaging lens in accordance with any one of the first to fourteenth aspects can be configured such that the infrared imaging lens has a relative illuminance of not less than 40% on the image surface in the image circle. The configuration makes it possible to provide an infrared imaging lens having a sufficient peripheral light quantity secured.

In a sixteenth aspect of the present invention, the infrared imaging lens in accordance with any one of the first to fifteenth aspects can be configured such that the glass is chalcogenide glass. The configuration makes it possible to configure an infrared imaging lens with use of a lens having an aspherical surface including a diffractive surface, and makes it possible to produce an imaging lens which is particularly excellent in aberration properties and resolution.

In a seventeenth aspect of the present invention, the infrared imaging lens in accordance with the sixteenth aspect can be configured such that the chalcogenide glass has an infrared absorption edge wavelength of not less than 18 µm at which the chalcogenide glass has a light transmittance of 20% measured at a thickness of 2 mm. The configuration makes it possible to configure an infrared imaging lens which exhibits very little light absorption in a wavelength range of interest.

In an eighteenth aspect of the present invention, the infrared imaging lens in accordance with any one of the first to seventeenth aspects can be configured such that the infrared imaging lens has an F-number of 1.0 to 1.2. The configuration makes it possible to configure a bright standard lens. Further, the configuration makes it possible to provide a standard lens which is excellent in resolution.

In a nineteenth aspect of the present invention, the infrared imaging lens in accordance with any one of the first to eighteenth aspects can be configured such that the infrared imaging lens has a focal length of 7 mm to 12 mm. The configuration makes it possible to configure an infrared imaging lens which is both compact and excellent in various properties such as resolution and brightness. Further, the configuration makes it possible to configure an infrared imaging lens which is excellent in various properties and low in cost so as to be available for commercial use.

In a twentieth aspect of the present invention, the infrared imaging lens in accordance with any one of the first to nineteenth aspects can be configured such that the infrared imaging lens has a total lens length of not more than 30 mm. The configuration makes it possible to configure an infrared imaging lens which is both compact and excellent in various properties such as resolution and brightness. Further, the configuration makes it possible to configure an infrared imaging lens which is excellent in various properties and low in cost so as to be available for commercial use.

An infrared camera in accordance with a twenty first aspect of the present invention includes: an infrared imaging lens recited in any one of the first to twentieth aspects; and an infrared image sensor. The configuration makes it possible to provide an infrared camera which is both compact and excellent in various properties such as resolution and brightness. Further, the configuration makes it possible to provide an infrared camera which is excellent in various properties and low in cost so as to be available for various commercial uses.

The present invention is not limited to the embodiments, but can be altered by a skilled person in the art within the scope of the claims. The present invention also encompasses, in its technical scope, any embodiment derived by combining technical means disclosed herein within the scope of the claims. is possible to form a new technical feature by combining the technical means disclosed herein within the scope of the claims.

The embodiment has shown an example in which an infrared imaging lens includes three lenses disposed in respective positions. However, application of the present invention is not limited to this, and it is possible to configure an infrared imaging lens which includes a plurality of lenses disposed in respective positions, the number of the plurality of lenses being other than three.

### Reference Signs List

- 1, 2, 3: Infrared imaging lens
- L1: First lens
- L2: Second lens
- L3: Third lens
- P: Parallel flat plate
- S: Image surface

## Claims

1. An infrared imaging lens (1), comprising a plurality of lenses (L1,L2,L3) which are disposed in respective positions,
the plurality of lenses each being made of glass having a refractive index of 2.8 to 4.0 measured at a wavelength of 10 µm,
the infrared imaging lens having an image circle having a diameter which is 0.7 times to 1.3 times a focal length of the infrared imaging lens,
a first lens (L1) disposed closest to an object side having positive power and a meniscus shape that is convex to the object side,
**characterised by** a focal length f1 of the first lens and a focal length f of the infrared imaging lens satisfying the following relational expression: $1.0 \leq f 1 / f \leq 2.9 .$

2. The infrared imaging lens as set forth in claim 1, wherein an effective diameter of an object-side surface of the first lens serves as an aperture of the infrared imaging lens.

3. The infrared imaging lens as set forth in any one of claims 1 or 2, wherein
the first lens,
a second lens, and
a third lens are disposed in this order from the object side to an image surface side.

4. The infrared imaging lens as set forth in claim 3, wherein the second lens and the third lens each have positive power.

5. The infrared imaging lens as set forth in claim 4, wherein:
the third lens has a highest power among the first lens, the second lens, and the third lens; and
the third lens has a meniscus shape that is convex to the image surface side.

6. The infrared imaging lens as set forth in any one of claims 3 to 5, wherein the second lens has a meniscus shape that is convex to the image surface side.

7. The infrared imaging lens as set forth in any one of claims 3 to 6, wherein at least one of an image surface-side surface of the second lens and an object-side surface of the third lens is a diffractive surface.

8. The infrared imaging lens as set forth in any one of claims 3 to 7, wherein a focal length f3 of the third lens and a focal length f of the infrared imaging lens satisfy the following relational expression: $0.8 \leq f 3 / f \leq 1.2 .$

9. The infrared imaging lens as set forth in any one of claims 1 to 8, wherein the infrared imaging lens has a half angle of view of 21° to 36°.

10. The infrared imaging lens as set forth in any one of claims 1 to 9, wherein the glass is chalcogenide glass.

11. The infrared imaging lens as set forth in claim 10, wherein the chalcogenide glass has an infrared absorption edge wavelength of not less than 18 µm at which the chalcogenide glass has a light transmittance of 20% measured at a thickness of 2 mm.

12. The infrared imaging lens as set forth in any one of claims 1 to 11, wherein the infrared imaging lens has an F-number of 1.0 to 1.2.

13. The infrared imaging lens as set forth in any one of claims 1 to 12, wherein the infrared imaging lens has a focal length of 7 mm to 12 mm.

14. The infrared imaging lens as set forth in any one of claims 1 to 13, wherein the infrared imaging lens has a total lens length of not more than 30 mm.

15. An infrared camera, comprising:
an infrared imaging lens recited in any one of claims 1 to 14; and
an infrared image sensor.

## Patentansprüche

1. Infrarot-Abbildungsobjektiv (1), umfassend eine Mehrzahl von Linsen (L1, L2, L3), die in jeweiligen Positionen angeordnet sind,
wobei die Mehrzahl von Linsen jeweils aus Glas mit einem bei einer Wellenlänge von 10 µm gemessenen Brechungsindex von 2,8 bis 4,0 besteht,
wobei das Infrarot-Abbildungsobjektiv einen Bildkreis mit einem Durchmesser aufweist, der das 0,7-fache bis 1,3-fache einer Brennweite des Infrarot-Abbildungsobjektivs beträgt,
wobei eine der Objektseite am nächsten angeordnete erste Linse (L1) eine positive Brechkraft und eine zur Objektseite hin konvexe Meniskusform aufweist, **dadurch gekennzeichnet, dass**
eine Brennweite f1 der ersten Linse und eine Brennweite f des Infrarot-Abbildungsobjektivs die folgende Beziehung erfüllen: $1 , 0 \leq f 1 / f \leq 2,9 .$

2. Infrarot-Abbildungsobjektiv nach Anspruch 1, wobei ein wirksamer Durchmesser einer objektseitigen Fläche der ersten Linse als Apertur des Infrarot-Abbildungsobjektivs dient.

3. Infrarot-Abbildungsobjektiv nach einem der Ansprüche 1 oder 2, wobei
die erste Linse, eine zweite Linse und
eine dritte Linse in dieser Reihenfolge von der Objektseite zu einer Bildoberflächenseite angeordnet sind.

4. Infrarot-Abbildungsobjektiv nach Anspruch 3, wobei die zweite Linse und die dritte Linse jeweils eine positive Brechkraft aufweisen.

5. Infrarot-Abbildungsobjektiv nach Anspruch 4, wobei:
die dritte Linse unter der ersten Linse, der zweiten Linse und der dritten Linse die höchste Brechkraft aufweist; und
die dritte Linse eine zur Bildoberflächenseite hin konvexe Meniskusform aufweist.

6. Infrarot-Abbildungsobjektiv nach einem der Ansprüche 3 bis 5, wobei die zweite Linse eine zur Bildoberflächenseite hin konvexe Meniskusform aufweist.

7. Infrarot-Abbildungsobjektiv nach einem der Ansprüche 3 bis 6, wobei mindestens eine von einer bildoberflächenseitigen Fläche der zweiten Linse und einer objektseitigen Fläche der dritten Linse eine beugende Fläche ist.

8. Infrarot-Abbildungsobjektiv nach einem der Ansprüche 3 bis 7, wobei eine Brennweite f3 der dritten Linse und eine Brennweite f des Infrarot-Abbildungsobjektivs die folgende Beziehung erfüllen: $0 , 8 \leq f 3 / f \leq 1,2 .$

9. Infrarot-Abbildungsobjektiv nach einem der Ansprüche 1 bis 8, wobei das Infrarot-Abbildungsobjektiv einen halben Bildwinkel von 21° bis 36° aufweist.

10. Infrarot-Abbildungsobjektiv nach einem der Ansprüche 1 bis 9, wobei das Glas ein Chalkogenidglas ist.

11. Infrarot-Abbildungsobjektiv nach Anspruch 10, wobei das Chalkogenidglas eine Infrarot-Absorptionskantenwellenlänge von nicht weniger als 18 µm aufweist, bei welcher das Chalkogenidglas eine bei einer Dicke von 2 mm gemessene Lichtdurchlässigkeit von 20% aufweist.

12. Infrarot-Abbildungsobjektiv nach einem der Ansprüche 1 bis 11, wobei das Infrarot-Abbildungsobjektiv eine Blendenzahl von 1,0 bis 1,2 aufweist.

13. Infrarot-Abbildungsobjektiv nach einem der Ansprüche 1 bis 12, wobei das Infrarot-Abbildungsobjektiv eine Brennweite von 7 mm bis 12 mm aufweist.

14. Infrarot-Abbildungsobjektiv nach einem der Ansprüche 1 bis 13, wobei das Infrarot-Abbildungsobjektiv eine Gesamtlänge des Objektivs von nicht mehr als 30 mm aufweist.

15. Infrarotkamera, umfassend:
ein Infrarot-Abbildungsobjektiv nach einem der Ansprüche 1 bis 14; und
einen Infrarot-Bildsensor.

## Revendications

1. Lentille d'imagerie infrarouge (1), comprenant une pluralité de lentilles (L1, L2, L3), disposées dans des positions respectives,
chacune des lentilles de la pluralité étant réalisée en verre présentant un indice de réfraction compris entre 2,8 et 4,0, mesuré à une longueur d'onde de 10 µm,
la lentille d'imagerie infrarouge présentant un cercle d'image dont le diamètre est compris entre 0,7 et 1,3 fois une distance focale de la lentille d'imagerie infrarouge,
une première lentille (L1) disposée la plus près d'un côté objet présentant une puissance positive et une forme ménisque convexe vers le côté objet,
**caractérisé en ce qu'**une distance focale f1 de la première lentille et une distance focale f de la lentille d'imagerie infrarouge satisfont à l'expression relationnelle suivante : $1 , 0 \leq f 1 / f \leq 2,9 .$

2. Lentille d'imagerie infrarouge selon la revendication 1, dans lequel un diamètre effectif d'une surface côté objet de la première lentille sert d'ouverture de la lentille d'imagerie infrarouge.

3. Lentille d'imagerie infrarouge selon l'une quelconque des revendications 1 ou 2, dans lequel la première lentille,
une deuxième lentille et
une troisième lentille sont disposées dans cet ordre du côté objet vers le côté de la surface d'image.

4. Lentille d'imagerie infrarouge selon la revendication 3, dans lequel la deuxième lentille et la troisième lentille ont chacune une puissance positive.

5. Lentille d'imagerie infrarouge selon la revendication 4, dans lequel :
la troisième lentille présente une puissance la plus élevée parmi la première lentille, la deuxième lentille et la troisième lentille ; et
la troisième lentille présente une forme de ménisque convexe vers le côté de la surface d'image.

6. Lentille d'imagerie infrarouge selon l'une quelconque des revendications 3 à 5, dans lequel la deuxième lentille présente une forme de ménisque convexe vers le côté de la surface d'image.

7. Lentille d'imagerie infrarouge selon l'une quelconque des revendications 3 à 6, dans lequel au moins l'une parmi une surface côté surface d'image de la deuxième lentille et une surface côté objet de la troisième lentille est une surface diffractive.

8. Lentille d'imagerie infrarouge selon l'une quelconque des revendications 3 à 7, dans lequel une distance focale f3 de la troisième lentille et une distance focale f de la lentille d'imagerie infrarouge satisfont à l'expression relationnelle suivante : $0 , 8 \leq f 3 / f \leq 1,2 .$

9. Lentille d'imagerie infrarouge selon l'une quelconque des revendications 1 à 8, la lentille d'imagerie infrarouge présentant un demi-angle de champ compris entre 21° et 36°.

10. Lentille d'imagerie infrarouge selon l'une quelconque des revendications 1 à 9, dans lequel le verre est un verre de chalcogénure.

11. Lentille d'imagerie infrarouge selon la revendication 10, dans lequel le verre de chalcogénure présente une longueur d'onde du seuil d'absorption infrarouge d'au moins 18 µm, à laquelle le verre de chalcogénure présente une transmittance lumineuse de 20 %, mesurée à une épaisseur de 2 mm.

12. Lentille d'imagerie infrarouge selon l'une quelconque des revendications 1 à 11, la lentille d'imagerie infrarouge présentant un nombre d'ouverture compris entre 1,0 et 1,2.

13. Lentille d'imagerie infrarouge selon l'une quelconque des revendications 1 à 12, la lentille d'imagerie infrarouge présentant une distance focale comprise entre 7 mm et 12 mm.

14. Lentille d'imagerie infrarouge selon l'une quelconque des revendications 1 à 13, la lentille d'imagerie infrarouge présentant une longueur de lentille totale qui ne dépasse pas 30 mm.

15. Caméra infrarouge, comprenant :
une lentille d'imagerie infrarouge tel que défini dans l'une quelconque des revendications 1 à 14 ; et
un capteur d'images infrarouges.
